# FASCICULE DE BREVET EUROPEEN

(11) **EP 2 734 396 B1**
(45) Date de publication et mention de la délivrance du brevet: **06.04.2016**
(21) Numéro de dépôt: 12744074.1
(22) Date de dépôt: 10.07.2012
(51) Int. Cl.: B60K 15/05

(54) **TRAPPE A CARBURANT A ARTICULATION SIMPLE ET SON PROCEDE DE MONTAGE SUR UN VEHICULE**
EINFACH ANGELENKTE TANKKLAPPE UND VERFAHREN ZUR MONTAGE AN EINEM FAHRZEUG
SIMPLY ARTICULATED FUEL FLAP AND METHOD OF MOUNTING IT TO A VEHICLE

(30) Priorité: 19.07.2011 FR 1156532
(43) Date de publication de la demande: 28.05.2014
(73) Titulaire: Renault S.A.S., 92100 Boulogne-Billancourt (FR)
(72) Inventeur: HOUARI-ZANIROLI, Pascal, F-78150 Le Chesnay (FR); LOSADA-ALVAREZ, Ramon, F-78320 Le Mesnil Saint Denis (FR)
(74) Mandataire: Renou, Jean-François
(86) Numéro de dépôt international: PCT/FR2012/051630
(87) Numéro de publication internationale: WO 2013/011227

(56) Documents cités:
- FR-A1- 2 930 914
- FR-A1- 2 932 426
- US-A- 5 165 749

## Description

L'invention concerne une trappe à carburant à articulation simple et son procédé de montage sur la caisse d'un véhicule.

Le montage des panneaux de trappe à carburant à articulation simple (sans col de cygne, c'est-à-dire à charnière comportant un charnon fixe et un charnon mobile) sur le côté de caisse d'un véhicule automobile est souvent réalisé directement sur une pièce dite « bol de trappe» ou boîtier de réception de pipe de remplissage du réservoir de carburant. Ce montage est réalisé pour que le panneau de trappe à carburant obture parfaitement l'ouverture de la trappe à carburant sur la caisse du véhicule. Néanmoins, la tolérance de position de ce bol de trappe relativement à l'ouverture de la trappe à carburant peut varier jusqu'à quelques millimètres d'une position théorique du bol sur la caisse. Par conséquent, en position fermée, le panneau de trappe à carburant à articulation simple peut être sujet à un décalage inesthétique par rapport à l'ouverture de côté de caisse correspondante.

Une trappe à carburant selon le préambule de la revendication 1 et un procédé de montage selon le préambule de la revendication 7 sont connus du document FR-A-2 932 426.

Il existe un besoin pour une trappe à carburant obturant parfaitement l'ouverture de trappe et pour un procédé permettant le montage d'une trappe à carburant à articulation simple sur la caisse d'un véhicule qui permette un positionnement correct du panneau de trappe relativement à l'ouverture de trappe sur la caisse de véhicule.

Un premier objet de l'invention concerne une trappe à carburant à articulation simple destinée à être fixée sur la caisse d'un véhicule, ladite trappe à carburant comportant un bol de trappe, un panneau de trappe et une charnière d'articulation du panneau de trappe sur le bol de trappe, caractérisée en ce que ladite trappe à carburant comprend une plaquette de ferrage fixée sur le bol de trappe et sur laquelle est fixée la charnière, la plaquette de ferrage comportant des moyens de fixation sur le bol de trappe, des moyens de fixation sur la charnière et des moyens d'indexation par rapport à la caisse de véhicule.

La plaquette de ferrage disposée sur le bol de trappe joue ainsi le rôle d'une pièce support du panneau de trappe, intermédiaire entre la trappe à carburant et le bol de trappe.

Notamment, ces moyens d'indexation peuvent être conçus pour permettre (par exemple en coopération avec un gabarit de montage) un positionnement correct du panneau de trappe par rapport à la caisse du véhicule lorsque la plaquette de ferrage est positionnée.

L'utilisation d'une plaquette de ferrage comportant des moyens d'indexation par rapport à la caisse du véhicule (et non plus par rapport au bol de trappe à carburant) permet ainsi de s'affranchir des dispersions de position de montage du bol de trappe relativement à la caisse de véhicule et d'assurer un positionnement précis du panneau de trappe relativement à l'ouverture de trappe correspondante de la caisse du véhicule.

Une telle plaquette de ferrage peut en outre être facilement réalisée et adaptée à toute trappe à carburant à articulation simple existante.

Avantageusement, les moyens de fixation de la plaquette de ferrage sur le bol de trappe comprennent des trous de fixation de dimension supérieure à des trous de fixation correspondants du bol de trappe à carburant. Le jeu des trous de fixation de la plaquette de ferrage relativement à ceux du bol de trappe permet d'ajuster la position de la plaquette de ferrage par rapport au bol de trappe.

La plaquette de ferrage peut avantageusement être fixée au moyen de vis enfilées chacune dans un des trous de fixation de la plaquette de ferrage au bol de trappe et en prise dans un taraudage de chacun des trous de fixation correspondants sur le bol de trappe.

Les vis permettent d'ajuster manuellement la position de montage de la plaquette de ferrage sur le bol de trappe en jouant sur le serrage des vis l'une par rapport à l'autre et, une fois la position de la plaquette de ferrage atteinte, de réaliser un serrage définitif des vis.

Les moyens d'indexation de la plaquette de ferrage seront avantageusement des orifices, par exemple aptes à coopérer avec un gabarit de montage.

La plaquette de ferrage peut avoir un contour correspondant au moins à celui de la charnière du panneau de trappe, ce qui permet l'appui de support de cette charnière, et plus particulièrement de sa partie fixe, sur la plaquette de ferrage.

Avantageusement, les extrémités de la plaquette de ferrage sont supportées par des épaulements ménagés sur le fond du bol de trappe à carburant, lesdites extrémités étant fixées sur ces épaulements.

Les trous de fixation de la plaquette de ferrage au bol de trappe sont alors disposés sur des parties d'extrémité de la plaquette de ferrage, par exemple débordant du contour de la charnière, ce qui assure un large entraxe des trous de fixation favorisant la précision du montage. L'accès des trous de fixation de la plaquette de ferrage est en outre maintenu lorsque ces derniers débordent du contour de la charnière, permettant un démontage aisé.

Un autre objet de l'invention est un procédé de montage d'une trappe à carburant à articulation simple sur un côté de caisse d'un véhicule automobile comme défini dans la revendication 7.

L'utilisation d'un gabarit indexé géométriquement au côté de caisse, par exemple en référence à des bords du côté de caisse, permet un positionnement simple et rapide de la plaquette de ferrage, assurant un bon positionnement du panneau de trappe par rapport au côté de caisse.

Avantageusement, la plaquette de ferrage est positionnée par le gabarit de montage sur le bol de trappe en altitude et selon l'axe longitudinal du véhicule de sorte que, en position fermée, le contour du panneau de trappe corresponde à l'ouverture de trappe à carburant sur le côté de caisse du véhicule.

Avantageusement, la plaquette de ferrage est fixée au moyen de vis enfilées chacune dans un des trous de fixation de la plaquette de ferrage au bol de trappe et en prise dans un taraudage de chacun des trous de fixation correspondants sur le bol de trappe à carburant, ce qui permet un ajustage manuel avant la fixation définitive, tel que mentionné plus haut.

Un autre objet de l'invention est un véhicule équipé d'une trappe à carburant selon l'invention.

L'invention est à présent illustrée à l'aide d'un exemple de réalisation non limitatif de l'invention et en référence aux dessins annexés sur lesquels :
- la fig. 1 est une vue éclatée d'une trappe à carburant à articulation simple montée sur le côté de caisse d'un véhicule automobile selon un mode de réalisation de l'invention, et
- la fig. 2 est une vue en coupe de la trappe à carburant de la figure 1.

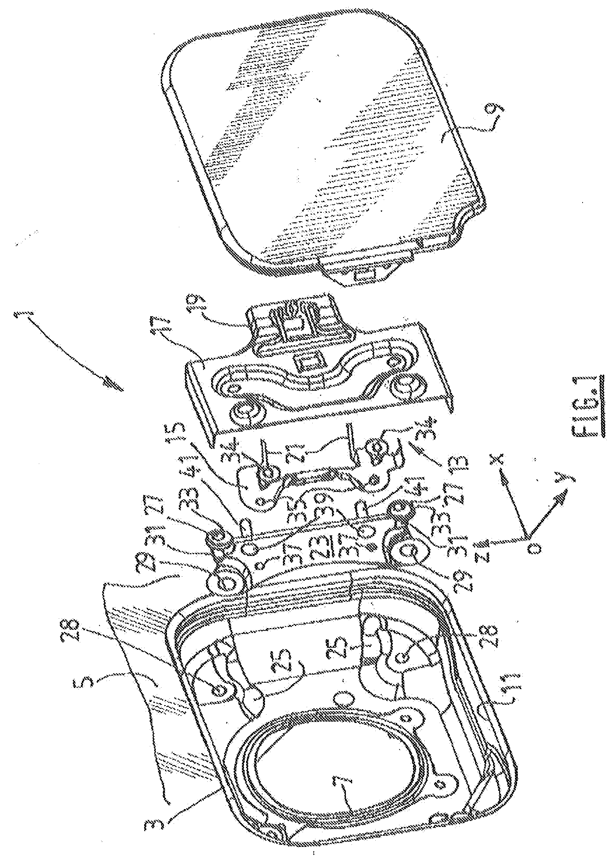

Un repère orthonormé est représenté à la figure 1.

Avec référence aux dessins, on a représenté une trappe à carburant 1 à articulation simple comprenant un bol de trappe 3, un panneau de trappe 9 et une charnière 13 d'articulation du panneau de trappe 9 sur le bol de trappe 3.

La trappe à carburant 1 est montée sur un côté de caisse 5 d'un véhicule automobile.

Le bol de trappe 3 est un boîtier concave classique recevant par une ouverture centrale 7 un conduit interne menant au réservoir de carburant du véhicule (non représenté).

Le panneau de trappe 9 est découpé aux dimensions d'une ouverture de trappe à carburant 11 sur le côté de caisse 5.

La trappe à carburant 1 comporte la charnière 13 tournée vers le bol de trappe 3, cette charnière 13 permettant les manoeuvres d'articulation du panneau de trappe 9 en ouverture ou en fermeture le long de la paroi externe de côté de caisse 5.

La charnière 13 comporte un charnon fixe 15 et un charnon mobile 17 assemblé au panneau de trappe 9.

Le charnon fixe 15 est destiné à être solidarisé au bol de trappe 3.

Le charnon mobile 17 est monté libre en rotation sur le charnon fixe 15 par une partie médiane 19 de largeur réduite montée articulée sur deux pattes en saillie 21 du charnon fixe 15.

Le montage de la trappe à carburant 1 fait intervenir une plaquette de ferrage 23 sur laquelle la charnière 13 est appliquée, et plus précisément le charnon fixe 15 de celle-ci.

Dans l'exemple représenté, la plaquette de ferrage 23 présente un contour légèrement plus grand que le contour de la charnière 13, et notamment que le contour du charnon fixe 15. En particulier, des extrémités opposées de la plaquette de ferrage 23 destinées à être solidarisées au bol de trappe 3 font saillie de la charnière 13 (notamment de son charnon fixe 15), lorsque la charnière 13 est appliquée sur la plaquette de ferrage 23, prête à y être fixée.

La plaquette de ferrage 23 comprend des moyens de fixation sur le bol de trappe 3. Par exemple, ces moyens de fixation comprennent des vis 27 et des trous de fixation 29.

Dans l'exemple, la plaquette de ferrage 23 est fixée sur le bol de trappe 3, sur deux épaulements opposés 25 de ce dernier, au moyen de deux vis 27 disposées à ses extrémités. Ces vis 27 sont serrées en prise chacune dans un taraudage 28 correspondant, formé dans chaque épaulement 25 du bol de trappe 3.

Les trous de fixation 29 des vis 27 sur la plaquette 23 sont d'un diamètre plus grand que celui du corps de vis 31 mais plus petit que celui de la tête 33 des vis 27. Ainsi, ces trous de fixation 29 ménagent un jeu de positionnement de la plaquette de ferrage 23 sur le bol de trappe 3, de préférence de 1 à 3 mm, et permettent le serrage de fixation des têtes de vis 33 en appui sur la plaquette de ferrage 23.

La plaquette de ferrage 23 comprend également des moyens de fixation sur la charnière 13, et plus particulièrement sur le charnon fixe 15 de celle-ci. Ces moyens de fixation seront de préférence conçus pour permettre une fixation rigide et un positionnement précis du panneau de trappe 9 par rapport à la charnière 13, ceci afin de faciliter le positionnement correct du panneau de trappe 9 après positionnement de la plaquette de trappe 23. Par exemple, ces moyens de fixation comprennent des rivets 34, ou analogues, et des trous de fixation 37.

Dans l'exemple, la plaquette de ferrage 23 reçoit en fixation le charnon fixe 15 de la trappe au moyen des deux rivets 34, par exemple des rivets « pop », permettant une fixation rapide et commode, déposés chacun en correspondance trou pour trou dans un trou 35 du charnon fixe 15 et dans un trou correspondant 37 de la plaquette de ferrage 23. Cette fixation par rivets est précise et rigide. Cette fixation permet en outre le positionnement du montage du panneau de trappe 9 sur la plaquette de ferrage 23.

La plaquette de ferrage 23 comprend encore des moyens d'indexation par rapport à la caisse de véhicule, de préférence positionnés à distance les uns des autres, par exemple à des extrémités opposées. Il s'agit par exemple de trous de passage généralement distincts des trous de fixation du bol de trappe 3 et de la charnière 13. Ils peuvent toutefois servir de trous de fixation de la charnière 13.

Dans l'exemple, la plaquette de ferrage 23 comporte ainsi deux autres orifices 39 proches chacun d'un trou 29 de fixation de vis à une extrémité de la plaquette 23.

Ces orifices 39 permettent, au moyen d'un gabarit de montage (non représenté), le repérage de positionnement de la plaquette de ferrage 23 sur le bol de trappe 3 lors du montage de la plaquette de ferrage 23 sur le bol de trappe 3.

Ce gabarit de montage est appliqué sur le côté de caisse 5 du véhicule à une position indexée en référence à des bords du coté de caisse. Ces bords de références peuvent être des bords du côté de caisse 5 et/ou des bords de l'ouverture de trappe à carburant 11.

Le gabarit de montage de la trappe peut être du type optique permettant par visée optique d'aligner des éléments repères géométriques de la caisse de véhicule et des repères de positionnement de la pièce de ferrage, ou de type positionnement par contact sur des éléments repères géométriques, cales de position par exemple sur la caisse ou l'ouverture de trappe de carburant.

Le gabarit est indexé géométriquement en altitude, selon une direction verticale, en Z sur la figure 1, et selon l'axe longitudinal du véhicule, selon une direction perpendiculaire à la précédente et s'étendant de l'avant vers l'arrière du véhicule, en X sur la figure 1.

Notamment, le gabarit de montage peut être un gabarit de type positionnement par contact, comportant des tiges 41 de diamètre complémentaire des orifices 39 précités, et disposées parallèlement depuis le gabarit de montage. L'insertion des tiges 41 dans les orifices 39 permet ainsi de positionner la plaquette de ferrage 23 sur le bol de trappe 3.

Alternativement, il pourrait être envisagé d'envoyer un faisceau lumineux de type laser définissant sur le bol de trappe une image projetée de ces orifices 39, laquelle correspond au positionnement souhaité de la plaquette de ferrage 23 sur le bol de trappe 3.

On pourra ainsi proposer un dispositif de montage d'une trappe à carburant à articulation simple sur un bol de trappe d'un côté de caisse d'un véhicule, ladite trappe à carburant comportant un bol de trappe à carburant, un panneau de trappe et une charnière d'articulation du panneau de trappe sur le bol de trappe à carburant, mis en oeuvre selon le procédé de l'invention, ce dispositif comprenant :
- une plaquette de ferrage apte à être montée sur le bol de trappe et destinée à recevoir le panneau de trappe, cette plaquette de ferrage comportant au moins deux trous de fixation au bol de trappe à carburant, ces deux trous de fixation étant de dimension supérieure à celle des trous de fixation correspondants sur le bol de trappe à carburant, et
- un gabarit de montage de la trappe à carburant apte à être mis en référence d'indexation géométrique au côté de caisse en sorte de positionner correctement la trappe à carburant relativement au côté de caisse.

Le montage de la trappe à carburant est à présent décrit.

Le bol de trappe 3 étant monté sur la caisse du véhicule, le gabarit de montage est appliqué sur le côté de caisse 5 et indexé géométriquement en position par rapport à la caisse comme précisé ci-dessus.

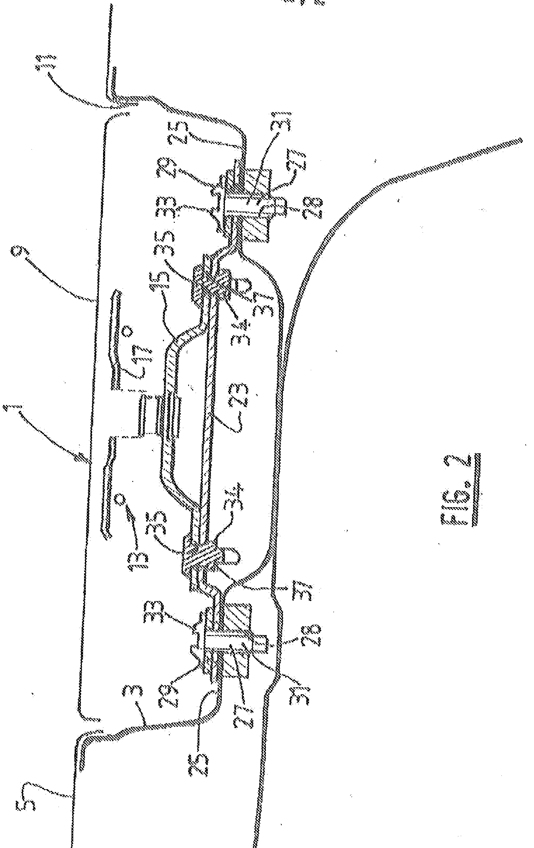

La plaquette de ferrage 23 est alors disposée sur le bol de trappe 3, sur les épaulements 25 de fixation du bol de trappe. Cette plaquette 23 est positionnée en sorte que les orifices 39 reçoivent les tiges 41 du gabarit de montage. Les vis de fixation 27 sont simultanément vissées sur les taraudages correspondants 28 du bol de trappe 3, et lorsque la position précise de la plaquette de ferrage 23 est obtenue, on serre rigidement ces vis de fixation 27. Il s'agit maintenant d'assembler le panneau de trappe 9 à la plaquette de ferrage 23 en posant les rivets 34 de fixation du charnon fixe 15 sur la plaquette de ferrage 23. La trappe à carburant est à présent montée en correspondance précise de l'ouverture de trappe 11 sur le côté de la caisse 5 (figure 2).

Le gabarit de montage peut maintenant être déposé du véhicule.

Ce qui précède montre la simplicité du montage selon l'invention d'une trappe à carburant à articulation simple sur la caisse d'un véhicule qui permet d'obtenir un positionnement correct de la trappe à carburant relativement à l'ouverture de trappe à carburant sur la caisse de véhicule.

## Revendications

1. Trappe à carburant (1) à articulation simple destinée à être fixée sur la caisse d'un véhicule, ladite trappe à carburant (1) comportant un bol de trappe (3), un panneau de trappe (9) et une charnière (13) d'articulation du panneau de trappe (9) sur le bol de trappe (3), **caractérisée en ce que** ladite trappe à carburant (1) comprend une plaquette de ferrage (23) fixée sur le bol de trappe (3) et sur laquelle est fixée la charnière (13), la plaquette de ferrage (23) comportant des moyens de fixation sur le bol de trappe (3), des moyens de fixation sur la charnière (13) et des moyens d'indexation par rapport à la caisse de véhicule.

2. Trappe à carburant (1) selon la revendication 1, **caractérisée en ce que** les moyens de fixation de la plaquette de ferrage (23) sur le bol de trappe (3) comprennent des trous de fixation (29) de dimension supérieure à des trous de fixation correspondants du bol de trappe (3).

3. Trappe à carburant (1) selon la revendication 2, **caractérisée en ce que** les moyens de fixation de la plaquette de ferrage (23) sur le bol de trappe (3) comprennent des vis (27) enfilées chacune dans un des trous de fixation (29) de la plaquette de ferrage (23) au bol de trappe (3) et en prise chacune dans un taraudage (28) correspondant du bol de trappe (3).

4. Trappe à carburant (1) selon l'une des revendications 1 à 3, **caractérisée en ce que** les moyens d'indexation comprennent des orifices (39).

5. Trappe à carburant (1) selon l'une des revendications 1 à 4, **caractérisée en ce que** la plaquette de ferrage (23) présente un contour correspondant au moins à celui de la charnière (13).

6. Trappe à carburant (1) selon l'une des revendications 1 à 5, **caractérisée en ce que** les extrémités de la plaquette de ferrage (23) sont supportées par des épaulements (25) ménagés sur le fond du bol de trappe (3), lesdites extrémités étant fixées sur ces épaulements (25).

7. Procédé de montage d'une trappe à carburant (1) à articulation simple sur un côté de caisse (5) d'un véhicule automobile, ladite trappe à carburant comportant un bol de trappe (3), un panneau de trappe (9) et une charnière (13) d'articulation du panneau de trappe (9) sur le bol de trappe (3), le procédé comprenant les étapes suivantes:
- monter le bol de trappe (3) sur le côté de caisse (5) du véhicule,
- disposer un gabarit de montage sur le côté de caisse (5), ce gabarit étant indexé géométriquement au côté de caisse (5),
**caractérisé en ce que** le procédé comprend en outre les étapes suivantes:
- positionner une plaquette de ferrage (23) sur le bol de trappe par rapport au côté de caisse (5) au moyen du gabarit de sorte que la plaquette de ferrage (23) reçoive en fixation le panneau de trappe (9) positionné par rapport au côté de caisse (5), la plaquette de ferrage (23) comportant des moyens de fixation sur le bol de trappe (3), des moyens de fixation sur la charnière (13) et des moyens d'indexation aptes à coopérer avec le gabarit,
- fixer la plaquette de ferrage (23) sur le bol de trappe (3),
- fixer la charnière (13) assemblée au panneau de trappe (9) sur la plaquette de ferrage (23).

8. Procédé de montage selon la revendication 7, **caractérisé en ce que** la plaquette de ferrage (23) est positionnée par le gabarit de montage sur le bol de trappe (3) en altitude et selon l'axe longitudinal du véhicule.

9. Procédé de montage selon l'une des revendications 7 ou 8, **caractérisé en ce que** la plaquette de ferrage (23) est fixée au moyen de vis (27) enfilées chacune dans un des trous (29) de fixation de la plaquette de ferrage au bol de trappe (3) et en prise dans un taraudage (28) de chacun des trous de fixation correspondants sur le bol de trappe (3).

10. Véhicule comportant une trappe à carburant (1) selon l'une des revendications 1 à 6.

## Patentansprüche

1. Einfach angelenkte Tankklappe (1), die dazu bestimmt ist, an der Karosserie eines Fahrzeugs befestigt zu werden, wobei die Tankklappe (1) eine Tankklappenschale (3), ein Tankklappenblatt (9) und ein Gelenkscharnier (13) des Tankklappenblattes (9) an der Tankklappenschale (3) aufweist, **dadurch gekennzeichnet, dass** die Tankklappe (1) eine Beschlagplatte (23) aufweist, die an der Tankklappenschale (3) befestigt ist und an der das Scharnier (13) befestigt ist, wobei die Beschlagplatte (23) Mittel zum Befestigen an der Tankklappenschale (3), Mittel zum Befestigen an dem Scharnier (13) und Mittel zur Indexierung in Bezug auf die Karosserie des Fahrzeugs aufweist.

2. Tankklappe (1) nach Anspruch 1, **dadurch gekennzeichnet, dass** die Mittel zum Befestigen der Beschlagplatte (23) an der Tankklappenschale (3) Befestigungslöcher (29) mit einer Abmessung, die größer als die entsprechenden Befestigungslöcher der Tankklappenschale (3) ist, aufweisen.

3. Tankklappe (1) nach Anspruch 2, **dadurch gekennzeichnet, dass** die Mittel zum Befestigen der Beschlagplatte (23) an der Tankklappenschale (3) Schrauben (27) aufweisen, die jeweils in eines der Befestigungslöcher (29) der Beschlagplatte (23) an der Tankklappenschale (3) gesteckt sind und jeweils in ein entsprechendes Innengewinde (28) der Tankklappenschale (3) eingreifen.

4. Tankklappe (1) nach einem der Ansprüche 1 bis 3, **dadurch gekennzeichnet, dass** die Mittel zur Indexierung Öffnungen (39) aufweisen.

5. Tankklappe (1) nach einem der Ansprüche 1 bis 4, **dadurch gekennzeichnet, dass** die Beschlagplatte (23) eine Kontur aufweist, die mindestens jener des Scharniers (13) entspricht.

6. Tankklappe (1) nach einem der Ansprüche 1 bis 5, **dadurch gekennzeichnet, dass** die Enden der Beschlagplatte (23) durch Schultern (25) getragen sind, die auf dem Boden der Tankklappenschale (3) angeordnet sind, wobei die Enden auf diesen Schultern (25) befestigt sind.

7. Verfahren zur Montage einer einfach angelenkten Tankklappe (1) auf einer Seite der Karosserie (5) eines Fahrzeugs, wobei die Tankklappe eine Tankklappenschale (3), ein Tankklappenblatt (9) und ein Gelenkscharnier (13) des Tankklappenblatts (9) an der Tankklappenschale (3) aufweist, wobei das Verfahren die folgenden Schritte aufweist:
- Montieren der Tankklappenschale (3) an der Seite der Karosserie (5) des Fahrzeugs,
- Anordnen einer Montageschablone an der Seite der Karosserie (5), wobei diese Schablone geometrisch an der Seite der Karosserie (5) indiziert wird,
**dadurch gekennzeichnet, dass** das Verfahren ferner die folgenden Schritte aufweist:
- Positionieren einer Beschlagplatte (23) an der Tankklappenschale (3) in Bezug auf die Seite der Karosserie (5) mit Hilfe einer Schablone, sodass die Beschlagplatte (23) das Tankklappenblatt (9) in Befestigung aufnimmt, das in Bezug auf die Seite der Karosserie (5) angeordnet wird, wobei die Beschlagplatte (23) Mittel zum Befestigen an der Tankklappenschale (3), Mittel zum Befestigen an dem Scharnier (13) und Mittel zur Indexierung aufweist, die geeignet sind, mit der Schablone zusammenzuwirken,
- Befestigen der Beschlagplatte (23) an der Tankklappenschale (3),
- Befestigen des Scharniers (13), das an das Tankklappenblatt (9) montiert ist, an der Beschlagplatte (23).

8. Verfahren zur Montage nach Anspruch 7, **dadurch gekennzeichnet, dass** die Beschlagplatte (23) durch die Montageschablone an der Tankklappenschale (3) in der Höhe und entlang der Längsachse des Fahrzeugs angeordnet wird.

9. Verfahren zur Montage nach einem der Ansprüche 7 oder 8, **dadurch gekennzeichnet, dass** die Beschlagplatte (23) mit Hilfe von Schrauben (27) befestigt wird, die jeweils in eines der Befestigungslöcher (29) der Beschlagplatte an der Tankklappenschale (3) und in Eingriff in ein Innengewinde (28) von jedem der entsprechenden Befestigungslöcher auf der Tankklappenschale (3) gesteckt werden.

10. Fahrzeug, umfassend eine Tankklappe (1) nach einem der Ansprüche 1 bis 6.

## Claims

1. Simply articulated fuel flap (1) intended to be fixed to the body of a vehicle, said fuel flap (1) comprising a flap bowl (3), a flap panel (9) and a hinge (13) articulating the flap panel (9) on the flap bowl (3), **characterized in that** said fuel flap (1) comprises a fitting plate (23) which is fixed to the flap bowl (3) and on which the hinge (13) is fixed, the fitting plate (23) comprising means for fixing to the flap bowl (3), means for fixing to the hinge (13) and means for indexing in relation to the vehicle body.

2. Fuel flap (1) according to Claim 1, **characterized in that** the means for fixing the fitting plate (23) to the flap bowl (3) comprise fixing holes (29) of dimension greater than the corresponding fixing holes of the flap bowl (3).

3. Fuel flap (1) according to Claim 2, **characterized in that** the means for fixing the fitting plate (23) to the flap bowl (3) comprise screws (27), which are each threaded into one of the holes (29) for fixing the fitting plate (23) to the flap bowl (3) and each held in a corresponding internal thread (28) of the flap bowl (3).

4. Fuel flap (1) according to any of Claims 1 to 3, **characterized in that** the indexing means comprise openings (39).

5. Fuel flap (1) according to any of Claims 1 to 4, **characterized in that** the fitting plate (23) has a contour corresponding at least to that of the hinge (13).

6. Fuel flap (1) according to any of Claims 1 to 5, **characterized in that** the ends of the fitting plate (23) are carried by shoulders (25) arranged on the base of the flap bowl (3), said ends being fixed to these shoulders (25).

7. Method for mounting a simply articulated fuel flap (1) to a side of a body (5) of a motor vehicle, said fuel flap comprising a flap bowl (3), a flap panel (9) and a hinge (13) articulating the flap panel (9) on the flap bowl (3), the method comprising the following steps:
- mounting the flap bowl (3) on the side of the vehicle body (5),
- arranging a mounting jig on the side of the body (5), said jig being indexed geometrically to the side of the body (5),
**characterized in that** the method further comprises the following steps:
- positioning a fitting plate (23) on the flap bowl in relation to the side of the body (5) by means of the jig, such that the fitting plate (23) receives, for fixing, the flap panel (9) positioned in relation to the side of the body (5), said fitting plate (23) comprising means for fixing to the flap bowl (3), means for fixing to the hinge (13) and indexing means able to cooperate with the jig,
- fixing the fitting plate (23) to the flap bowl (3),
- fixing the assembled hinge (13) to the flap panel (9) on the fitting plate (23).

8. Mounting method according to Claim 7, **characterized in that** the fitting plate (23) is positioned on the flap bowl (3) by the mounting jig in height and along the longitudinal axis of the vehicle.

9. Mounting method according to one of Claims 7 or 8, **characterized in that** the fitting plate (23) is fixed by means of screws (27) which are each threaded into one of the holes (29) for fixing the fitting plate to the flap bowl (3) and held in an internal thread (28) of each of the corresponding fixing holes on the flap bowl (3).

10. Vehicle comprising a fuel flap (1) according to any of Claims 1 to 6.
